# EUROPÄISCHE PATENTSCHRIFT

(11) **EP 3 049 695 B1**
(45) Veröffentlichungstag und Bekanntmachung des Hinweises auf die Patenterteilung: **22.11.2017**
(21) Anmeldenummer: 14766442.9
(22) Anmeldetag: 10.09.2014
(51) Int. Cl.: F16H 61/00

(54) **ZWISCHENPLATTE UND STEUEREINHEIT**
INTERMEDIATE PLATE AND CONTROL UNIT
PLAQUE INTERMÉDIAIRE ET UNITÉ DE COMMANDE

(30) Priorität: 25.09.2013 DE 102013219300
(43) Veröffentlichungstag der Anmeldung: 03.08.2016
(73) Patentinhaber: ElringKlinger AG, 72581 Dettingen (DE)
(72) Erfinder: SCHÖLLHAMMER, Jochen, 72581 Dettingen (DE); ANHORN, Thomas, 72581 Dettingen (DE); DETMANN, Klaus, 65396 Walluf (DE); WINKOVIC, Viktor, 86807 Buchloe (DE)
(74) Vertreter: Hoeger, Stellrecht & Partner Patentanwälte mbB
(86) Internationale Anmeldenummer: PCT/EP2014/069301
(87) Internationale Veröffentlichungsnummer: WO 2015/043956

(56) Entgegenhaltungen:
- DE-A1-102012 202 759
- DE-B3-102009 008 019
- US-A- 4 449 426

## Beschreibung

Die Erfindung betrifft eine Zwischenplatte zur Montage zwischen Gehäuseteilen einer fluidbetriebenen Steuereinheit, insbesondere einer Getriebeeinheit, umfassend eine plattenförmig ausgebildete Zentraleinheit und beiderseits der Zentraleinheit jeweils ein Dichtungssystem zur Abdichtung zwischen der Zentraleinheit und dem dieser gegenüberliegenden Gehäuseteil, welches auf der jeweiligen Seite der Zentraleinheit angeordnete, um Durchbrüche herum verlaufende Dichtelemente umfasst.

Derartige Zwischenplatten sind aus dem Stand der Technik bekannt, wobei bei diesen lediglich eine Führung des Fluid quer, das heißt senkrecht, zur Zwischenplatte möglich ist. Ein Beispiel einer Zwischenplatte mit den Merkmalen des Oberbegriffs des Anspruchs 1 ist aus der DE 10 2009 008019 bekannt.

Bei diesen Zwischenplatten besteht jedoch die Notwendigkeit, das Fluid nicht lediglich quer durch die Zwischenplatte hindurch zu führen, sondern gegebenenfalls auch komplexere Wege für das Fluid zu realisieren.

Der Erfindung liegt daher die Aufgabe zugrunde, eine Zwischenplatte der gattungsgemäßen Art derart zu verbessern, dass diese eine komplexe Fluidführung erlaubt.

Diese Aufgabe wird bei einer Zwischenplatte der eingangs beschriebenen Art erfindungsgemäß dadurch gelöst, dass die Zentraleinheit eine sich in einer Plattenebene erstreckende und mindestens einen in der Plattenebene verlaufenden Fluidführungskanal aufweisende Fluidführungsplatte sowie beiderseits der Fluidführungsplatte angeordnete und Durchbrüche als Zugänge zu dem mindestens einen Fluidführungskanal aufweisende Deckplatten umfasst, dass zwischen der jeweiligen Deckplatte und der Fluidführungsplatte ein den mindestens einen Fluidführungskanal abdichtendes Zwischendichtungssystem vorgesehen ist und dass die jeweilige Deckplatte das jeweilige Dichtungssystem zur Abdichtung zwischen der Zentraleinheit und dem jeweiligen Gehäuseteil trägt.

Der Vorteil der erfindungsgemäßen Lösung ist darin zu sehen, dass durch die Fluidführungsplatte die Möglichkeit besteht in der Plattenebene komplexe Wege für das Fluid zu realisieren, wobei diese Wege sich durch die beiden beiderseits der Fluidführungsplatte angeordneten Deckplatten abdecken und somit abdichten lassen, und wobei insbesondere die Deckplatten eine stabile Basis für die Abdichtung zu den Gehäuseteilen hin ermöglichen.

Vorzugsweise verhält sich dabei das Zwischendichtungssystem höhenelastisch, um Abstandstoleranzen zwischen der Fluidführungsplatte und den Deckplatten abzudichten.

Um eine derartige Zentraleinheit möglichst kostengünstig und auch hinsichtlich ihrer Druckfestigkeit dauerhaft herstellen zu können, ist vorzugsweise vorgesehen, dass das Zwischendichtungselement zusätzlich zur Abdichtungswirkung die Fluidführungsplatte mit der jeweiligen Deckplatte durch eine Klebewirkung verbindet.

Eine derartige Klebewirkung hat den großen Vorteil, dass damit eine dauerhafte Verbindung zwischen der Fluidführungsplatte und den Deckplatten realisierbar ist, die einerseits die notwendige Stabilität verleiht und andererseits die erforderliche Dichtigkeit.

Dabei ist insbesondere vorgesehen, dass das Zwischendichtungselement zusätzlich zu der Klebewirkung sich höhenelastisch verhält.

Ferner ist zweckmäßigerweise vorgesehen, dass Dichtelemente des Zwischendichtungssystems sowohl mit der Fluidführungsplatte als auch mit der jeweiligen Deckplatte klebend zusammenwirken und somit die Dichtung und die klebende Verbindung zwischen der Fluidführungsplatte und den Deckplatten durch ein Element realisierbar ist.

Der mindestens eine Fluidführungskanal ist insbesondere als einseitig offene Nut oder beidseitig offener die Fluidführungsplatte durchsetzender Durchbruch ausgebildet, der durch die Deckplatten verschlossen ist und von einem Zugang in mindestens einer der Deckplatten zu einem weiteren Zugang in mindestens einer der Deckplatten verläuft.

Vorzugsweise ist vorgesehen, dass Dichtelemente des Zwischendichtungssystems in einem Abstand von 2 mm oder weniger von Rändern des mindestens einen Fluidführungskanals verlaufen, um einen möglichst kompakten Aufbau der Zentraleinheit realisieren zu können.

Ferner ist vorgesehen, dass das Zwischendichtungssystem um den mindestens einen Fluidführungskanal in der Fluidführungsplatte herum verlaufende Dichtelemente umfasst.

Ferner sieht eine zweckmäßige Lösung vor, dass die Dichtelemente um den mindestens einen Fluidführungskanal in der Fluidführungsplatte und um die Durchbrüche in den Deckplatten und/oder der Fluidführungsplatte herum verlaufen.

Die Dichtelemente können dabei als flächenhafte Dichtungen ausgebildet sein oder als Liniendichtungen.

Mit Liniendichtungen ist eine besonders wirksame Realisierung einer Abdichtung möglich.

Die Abdichtung durch das Zwischendichtungssystem kann beispielsweise durch eine Klebemasse realisiert werden.

Eine besonders günstige Lösung sieht vor, dass das Zwischendichtungssystem zwischen der Fluidführungsplatte und der jeweiligen Deckplatte angeordnete Dichtelemente aus Elastomermaterial umfasst.

Besonders günstig ist es, wenn das Elastomermaterial auch eine Klebewirkung hat und somit die Fluidführungsplatte mit der jeweiligen Deckplatte zusätzlich zum Abdichten auch noch klebend verbindet.

Das Vorsehen eines haftend oder klebend wirkenden Elastomermaterials hat außerdem den Vorteil, dass das Elastomermaterial sowohl mit dem das Elastomermaterial tragenden Teil der Zwischenplatte als auch mit dem anderen Teil der Zwischenplatte im zusammengebauten Zustand eines feste Verbindung eingeht und somit Relativbewegungen zwischen den Teilen, insbesondere in Richtungen parallel zu einer Erstreckungsebene der Zwischenplatte, nicht zu Reibung des an dem Elastomer anliegenden Teils auf dem Elastomer und somit zu einer Beschädigung der Elastomerschicht im Laufe der Zeit führen, sondern zu weit weniger schädlichen Scherbewegungen in der Elastomerschicht, so dass eine verbesserte Dauerstandfestigkeit der Dichtelemente aus Elastomermaterial erreichbar ist.

Das Elastomermaterial könnte zum Beispiel ein Silikonmaterial sein.

Besonders günstig ist es jedoch, wenn das Elastomermaterial ein teilpolmerisiertes Kautschukmaterial umfasst, das durch die Teilpolymerisation auch noch eine klebende Wirkung hat.

Zweckmäßigerweise weist dabei das Kautschukmaterial einen Polymerisationsgrad auf, der im Bereich zwischen 15 % oder mehr und 90 % oder weniger liegt.

Insbesondere ist das Elastomermaterial ein Fluorpolymerkautschuk.

Hinsichtlich der Schichtdicken wurden dabei ebenfalls noch keine weiteren Angaben gemacht.

Vorzugsweise weist die Schicht aus Elastomermaterial eine Dicke von 5 µm oder mehr, besser 10 µm oder mehr, noch besser 15 µm oder mehr, auf.

Die Dicke ist zweckmäßigerweise auf 100 µm oder weniger, besser 50 µm oder weniger, noch besser 30 µm oder weniger, begrenzt.

Das Elastomermaterial kann vollflächig aufgetragen werden.

Das Elastomermaterial kann aber auch als partiell lokale Schicht aufgetragen werden.

Besonders günstig ist es, wenn das Elastomermaterial eine Klebewirkung aufweist, die bei Entfernung der Deckplatte von der Fluidführungsplatte zu einer Abzugsspannung von 0,1 kPa oder mehr führt, wobei als relevante Fläche die Gesamtfläche angesetzt ist, über die sich die Deckplatte und die Fluidführungsplatte in ihrem Überlappungsbereich erstrecken.

Ein derartiger Auftrag des Elastomermaterials kann in unterschiedlichster Weise erfolgen.

Eine günstige Lösung sieht vor, dass das Elastomermaterial auf der jeweiligen Platte durch Walzen oder durch Siebdruck aufgetragen ist.

Ein derartiges Auftragen des Elastomermaterials ermöglicht es in besonders einfacher Weise das Dichtelement herzustellen.

Ferner ist vorzugsweise vorgesehen, dass das Zwischendichtungssystem als Dichtelement auf der jeweiligen Platte, das heißt der Fluidführungsplatte und/oder den Deckplatten, angeordnete linienförmige Elastomerstreifen umfasst.

Alternativ dazu sieht eine vorteilhafte Lösung vor, dass zwischen den Deckplatten und der Fluidführungsplatte die Zwischendichtungssysteme bildende Dichtlagen mit eingeformten Dichtsicken als Dichtelemente angeordnet sind.

Diese Lösung erlaubt es, insbesondere aufgrund der vorteilhaften Höhenelastizität der Dichtsicken, einen dichten Abschluss zwischen der Fluidführungsplatte und den Deckplatten zu erreichen, wobei gegebenenfalls auch die Dichtsicken der Dichtelemente mit Elastomermaterial zur Mikroabdichtung beschichtet sein können.

Im Zusammenhang mit der Erläuterung der erfindungsgemäßen Lösung wurde bislang nicht näher auf die Eigenschaften der Deckplatten und der Fluidführungsplatten eingegangen.

Insbesondere dann, wenn komplexen Fluidführungskanäle durch einseitig offene Nuten oder beidseitig offene Durchbrüche in der Fluidführungsplatte realisiert werden sollen, besteht die Notwendigkeit, dass die Deckplatten eine ausreichende Steifigkeit aufweisen, um wiederum für das Dichtungssystem eine ausreichende Dichtpressung zur Verfügung stellen zu können.

Aus diesem Grund ist vorzugsweise vorgesehen, dass die Deckplatten eine Steifigkeit aufweisen, deren Durchbiegung über eine Distanz von 10 mm bei einem auf diesen flächenhaft lastenden Fluiddruck von 50 bar 100 µm oder weniger beträgt, vorzugsweise 50 µm oder weniger beträgt, noch besser 30 µm oder weniger beträgt und im Optimalfall 20 µm oder weniger beträgt.

Somit kann für die Auslegung des Dichtungssystems zwischen der Zentraleinheit und dem jeweiligen Gehäuseteil von definierten Verhältnissen zur Abstützung des Dichtungssystems durch die Zentraleinheit ausgegangen werden.

Eine derartige Steifigkeit der Deckplatten lässt sich in einfacher Weise dadurch realisieren, dass die Deckplatten aus Stahl hergestellt sind.

Vorzugsweise haben dabei die Deckplatten eine Dicke im Bereich zwischen 0,5 mm oder mehr und 2 mm oder weniger, um eine ausreichende Stabilität zu haben.

Alternativ dazu ist vorgesehen, dass die Deckplatten aus Aluminium oder Aluminiumlegierungen hergestellt sind.

In diesem Fall ist zweckmäßigerweise vorgesehen, dass die Deckplatten eine Dicke im Bereich zwischen 1 mm oder mehr und 2 mm oder weniger aufweisen.

Ferner ist vorzugsweise ein Elastizitätsmodul der Deckplatten vorgegeben.

Zweckmäßigerweise liegt der Elastizitätsmodul der Deckplatten im Bereich von 70 GPa oder mehr und 210 GPa oder weniger.

Um Deformationen sowohl der Gehäuseteile als auch Zentraleinheit ausgleichen zu können, ist vorzugsweise vorgesehen, dass die Deckplatten zur Ausbildung des Dichtungssystems auf ihrer dem jeweiligen Gehäuseteil zugewandten Seite Materialanhäufungen aufweisen.

Derartige Materialanhäufungen sind vorzugsweise so ausgebildet, dass sie eine Höhenprofilierung darstellen, wobei die Höhenprofilierung, beispielsweise entsprechend einem Abstand zwischen Verschraubungspunkten, variieren kann und somit nicht konstant sein muss.

Damit lassen sich Deformationen sowohl der Gehäuseteile als auch der Zentraleinheit, insbesondere der Deckplatten vorab kompensieren.

Vorzugsweise sind dabei die Materialanhäufungen rückseitenneutral ausgebildet.

Besonders günstig ist es, wenn die Materialanhäufungen durch Umformungen in den Deckplatten entstanden sind, das heißt, dass derartige Umformungen Stauchungen oder Prägungen der Deckplatten sein können.

Hinsichtlich des Dichtungssystems zwischen der Zentraleinheit und den Gehäuseteilen wurden bislang keine näheren Angaben gemacht.

So sieht eine vorteilhafte Lösung vor, dass das Dichtungssystem als Dichtelement auf der jeweiligen Deckplatte angeordnetes Elastomermaterial aufweist.

Das heißt, dass dieses Elastomermaterial auf einer plan verlaufenden Oberfläche der jeweiligen Deckplatte angeordnet sein kann.

Es besteht aber auch die Möglichkeit, das Dichtelement auf einer der vorstehend beschriebenen Materialanhäufungen anzuordnen, so dass die Möglichkeit besteht, Durchbiegungen der Gehäuseteile und der Zentraleinheit zu kompensieren.

Ein derartiges Elastomermaterial lässt sich in unterschiedlichster Weise auftragen, beispielsweise flächenhaft oder strukturiert.

Eine besonders kostengünstige Lösung sieht vor, dass das Elastomermaterial auf die jeweilige Deckplatte durch Walzen oder Siebdruck aufgetragen ist.

Insbesondere lässt sich das Elastomermaterial dadurch in einfacher Weise als Dichtelement auftragen, wenn das Dichtungssystem als Dichtelement auf der Deckplatte angeordnete Flächen und/oder linienförmige Streifen aus Elastomermaterial umfasst.

Das Elastomermaterial kann dabei in gleicher Weise ausgebildet sein und dieselbe Klebewirkung sowie dieselbe Dicke aufweisen, wie im Zusammenhang mit dem Elastomermaterial für das Zwischendichtungssystem beschrieben.

Alternativ oder ergänzend zum Vorsehen von Elastomermaterial sieht eine andere Lösung vor, dass auf den Deckplatten das Dichtungssystem bildende Dichtlagen mit eingeformten Dichtsicken als Dichtelemente angeordnet sind.

Ein Dichtungssystem mit Dichtsicken schafft die Möglichkeit, in vorteilhafter Weise Veränderungen von Durchbiegungen der Gehäuseteile und/oder der Zentraleinheit elastisch zu kompensieren.

Dabei können derartige Dichtsicken auch mit Elastomermaterial zur Mikroabdichtung kombiniert werden.

Derartige Dichtsicken können aber auch mit Materialanhäufungen zum Ausgleich von beispielsweise signifikanten Durchbiegungen der Gehäuseteile oder der Zentraleinheit kombiniert werden.

Ferner ist erfindungsgemäß vorgesehen, dass die Deckplatten und die Fluidführungsplatte jeweils aus Materialien hergestellt sind, deren Wärmeausdehnungskoeffizienten sich um maximal 20%, noch besser um maximal 10%, unterscheiden.

Eine derartige Materialauswahl von Deckplatten und Fluidführungsplatten hat den Vorteil, dass sich damit in einfacher Weise die Abdichtung zwischen diesen beiden realisieren lässt, ohne dass signifikante Probleme durch die unterschiedliche Wärmeausdehnung auftreten.

Besonders einfach ist es, wenn die Deckplatten und die Fluidführungsplatte aus identischen Materialien hergestellt sind.

Im Hinblick auf eine Leichtbauweise vorzugsweise vorgesehen, dass die Deckplatten und die Fluidführungsplatte aus Aluminium hergestellt sind.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische Explosionsdarstellung zweier bereichsweise aufgebrochen dargestellte Gehäuseteile einer Steuereinheit und eine schematische Darstellung einer Zwischenplatte zwischen diesen Gehäuseteilen;
- Fig. 2: eine ausschnittsweise vergrößerte Darstellung der Gehäuseteile, wie sie in dem montierten Zustand der Steuereinheit an einem ersten Ausführungsbeispiel der Zwischenplatte anliegen;
- Fig. 3: eine ausschnittsweise vergrößerte Darstellung der Gehäuseteile, wie sie in dem montierten Zustand der Steuereinheit an einem zweiten Ausführungsbeispiel der Zwischenplatte anliegen;
- Fig. 4: eine ausschnittsweise vergrößerte Darstellung der Gehäuseteile, wie sie in dem montierten Zustand der Steuereinheit an einem dritten Ausführungsbeispiel der Zwischenplatte anliegen;
- Fig. 5: eine ausschnittsweise vergrößerte Darstellung der Gehäuseteile, wie sie in dem montierten Zustand der Steuereinheit an einem vierten Ausführungsbeispiel der Zwischenplatte anliegen;
- Fig. 6: eine ausschnittsweise vergrößerte Darstellung der Gehäuseteile, wie sie in dem montierten Zustand der Steuereinheit an einem fünften Ausführungsbeispiel der Zwischenplatte anliegen und
- Fig. 7: eine ausschnittsweise vergrößerte Darstellung der Gehäuseteile, wie sie in dem montierten Zustand der Steuereinheit an einem sechsten Ausführungsbeispiel der Zwischenplatte anliegen.

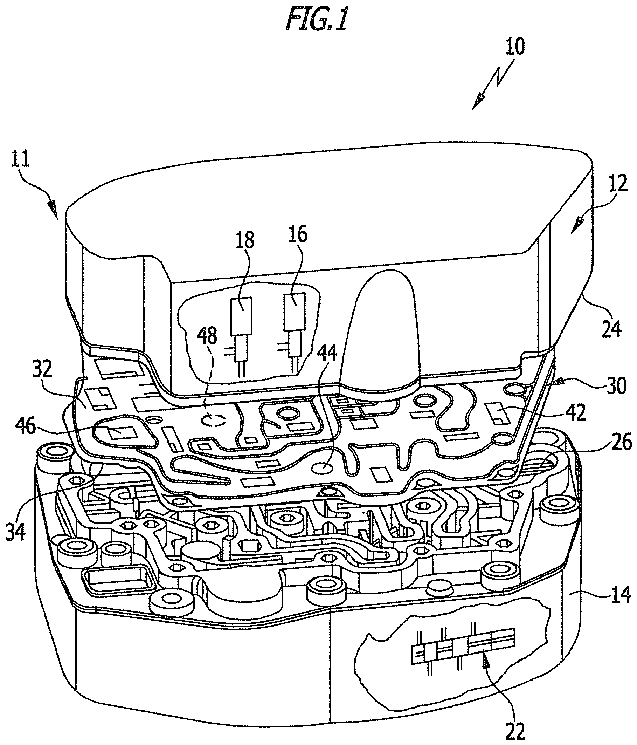

Eine in Fig. 1 schematisch dargestellte und als Ganzes mit 10 bezeichnete fluidbetriebene Steuereinheit, beispielsweise für eine fluidbetriebene Getriebeeinheit, insbesondere eine Getriebeeinheit für Kraftfahrzeuge, umfasst ein Steuerungsgehäuse 11, gebildet aus einem ersten Gehäuseteil 12, insbesondere aus Metall, und einen zweiten Gehäuseteil 14, insbesondere aus Metall, von denen beispielsweise das erste Gehäuseteil Ventile 16, 18 und das zweite Gehäuseteil 14 beispielsweise einen Schieber 22 aufweist, wobei diese jeweils einen Fluss von Fluid in dem jeweiligen Gehäuseteil 12, 14 steuern oder regeln.

Die beiden Gehäuseteile 12, 14 weisen einander zugewandte Kanalseiten 24 und 26 auf, welche so ausgebildet sind, dass das Fluid von dem einen Gehäuseteil 12, 14 in das jeweils andere Gehäuseteil 14, 12 übertreten kann.

Zwischen diesen Kanalseiten 24 und 26 der Gehäuseteile 12, 14 ist eine als Ganzes mit 30 bezeichnete Zwischenplatte eingesetzt, die an der Kanalseite 24 des ersten Gehäuseteils 12 mit einer ersten Seite 32 und an der Kanalseite 26 des zweiten Gehäuseteils 14 mit einer zweiten Seite 34 anliegt und jeweils mit den Kanalseiten 24, 26 dicht abschließt, wobei in der Zwischenplatte 30 Durchlässe, beispielsweise die Durchlässe 42, 44, und eventuell noch weitere Durchlässe, vorgesehen sind, durch welche ein Übertreten des Fluids von einem Gehäuseteil 12, 14 in das andere Gehäuseteil 14, 12 erfolgt.

Dabei ermöglichen einige der Durchlässe, beispielsweise der Durchlass 42, ein ungehindertes Übertreten des Fluids von dem einen Gehäuseteil 12, 14 in das jeweils andere Gehäuseteil 14, 12, ergänzend dazu dienen einige der Durchlässe, beispielsweise der Durchlass 44, als Drossel für das vom einen Gehäuseteil 12, 14 in das andere Gehäuseteil 14, 12 übertretende Fluid, wobei durch einen derartigen Durchlass eine gezielte anpassbare Drosselwirkung zur Steuerung von Abläufen, insbesondere zeitlichen Abläufen bei Schaltvorgängen, erreicht werden kann.

Ferner dient die Zwischenplatte 30 auch dazu, das Fluid über einen der Kanalseite 24 zugewandte Einlass 46 aufzunehmen und in einer Ebene der Zwischenplatte 30 über eine Distanz zu führen und an einem der Kanalseite 26 zugewandten Auslass 48 austreten zu lassen.

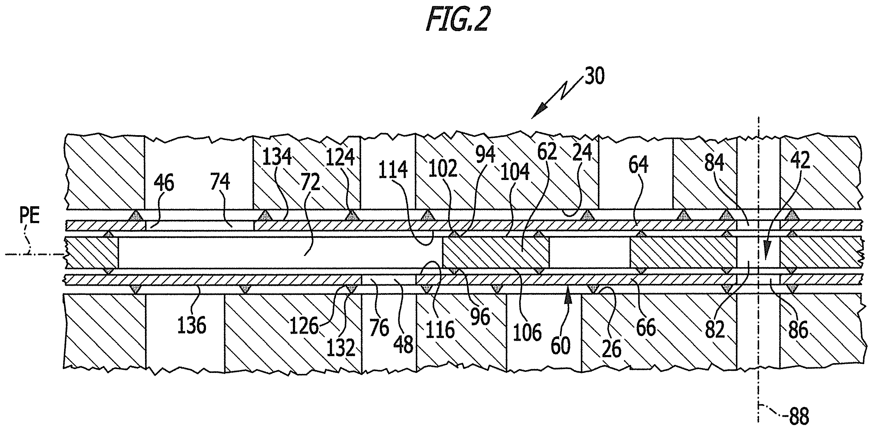

Die Zwischenplatte 30 umfasst, wie in Fig. 2 dargestellt, eine als Ganzes mit 60 bezeichnete Zentraleinheit, welche ihrerseits aus einer sich in einer Plattenebene PE erstreckenden Fluidführungsplatte 62 gebildet ist, sowie beiderseits der Fluidführungsplatte angeordnete Deckplatten 64, 66 aufweist.

Die Fluidführungsplatte 62 ist mit mindestens einem Fluidführungskanal 72 versehen, welcher als beiderseits offener die Fluidführungsplatte 62 durchsetzender Durchbruch derart in der Plattenebene PE verläuft, dass dieser den durch einen Durchbruch 74 in der Deckplatte 64 gebildeten Einlass 46 mit einem durch einen Durchbruch 76 in der Deckplatte 66 gebildeten Auslass 48 verbindet, so dass der Einlass 46 gegenüber dem Auslass 48 in Richtung der Plattenebene PE versetzt angeordnet sein kann.

Dabei ist der Fluidführungskanal 72 durch die Deckplatten 64 und 66 verschlossen und somit stellen lediglich der Durchbruch 74 und der Durchbruch 76 Zugänge zu diesem Fluidführungskanal 72 dar.

Ferner ist vorzugsweise die Zentraleinheit 60 aber auch so ausgebildet, dass sie ebenfalls auch den Durchlass 42 bildet, der seinerseits gebildet ist durch einen Durchbruch 82 in der Fluidführungsplatte, einen mit dem Durchbruch 82 fluchtenden Durchbruch 84 in der Deckplatte 64 sowie einen mit dem Durchbruch 82 fluchtenden Durchbruch 86 in der Deckplatte 66, so dass letztlich alle Durchbrüche 82, 84, 86 koaxial zu einer Mittelachse 88 angeordnet sind, die vorzugsweise senkrecht zur Plattenebene PE verläuft.

Zur Abdichtung zwischen der Fluidführungsplatte 62 sowie den beiden Deckplatten 64 und 66 ist jeweils zwischen der Fluidführungsplatte 62 und der jeweiligen Deckplatte 64 bzw. 66 ein Zwischendichtungssystem 94 bzw. 96 vorgesehen, wobei die Zwischendichtungssysteme 94, 96 bei dem ersten Ausführungsbeispiel linienförmig verlaufende Dichtelemente 102 aufweisen, die beispielsweise auf einer der jeweiligen Deckplatte 64 bzw. 66 zugewandten Oberfläche 104 bzw. 106 der Fluidführungsplatte 62 angeordnet sind und mit einer korrespondierenden Oberfläche 114 bzw. 116 der jeweiligen Deckplatte 64 bzw. 66 zusammenwirken, um sowohl um den mindestens einen Fluidkanal 72 herum als auch um die jeweiligen Durchbrüche 82 bzw. 84 und 86 herum einen fluiddichten Abschluss zu lassen.

Bei dem ersten, in Fig. 2 dargestellten Ausführungsbeispiel der erfindungsgemäßen Zwischenplatte 30 sind die Zwischendichtungssysteme 94 und 96 so ausgebildet, dass die Dichtelemente 102 aus Elastomermaterial hergestellt sind und auf die Oberflächen 104 und 106 und/oder die Oberflächen 114 und 116 aufgetragen sind.

Dabei ist vorzugsweise das Elastomermaterial der Dichtungselemente 102 so ausgebildet, dass diese zusätzlich zu ihrem höhenelastischen Verhalten eine klebende Verbindung zwischen der Fluidführungsplatte 62 und den Deckplatten 64, 66 bewirken.

Ferner tragen die Deckplatten 64 und 66 ihrerseits Dichtungssysteme 124, 126, welche ebenfalls Dichtelemente 132 aus Elastomermaterial aufweisen, die auf den Kanalseiten 24 bzw. 26 zugewandten Oberflächen 134, 136 der Deckplatten 64, 66 angeordnet sind und einen dichten Abschluss zwischen den jeweiligen Deckplatten 64 und 66 sowie der jeweiligen Kanalseite 24 bzw. 26 des entsprechenden Gehäuseteils 12 bzw. 14 bewirken.

Auch diese Dichtelemente 132 sind vorzugsweise aus Elastomermaterial hergestellt, welches beispielsweise im Siebdruckverfahren auf die Oberflächen 134 bzw. 136 aufgetragen und auf diesen fixiert ist.

Das Elastomermaterial kann dabei zweckmäßigerweise ebenfalls so ausgebildet sein, dass dieses zusätzlich zu seinem höhenelastischen Verhalten mit den Kanalseiten 24, 26 in eine an diesen haftende oder an diesen klebende Verbindung bringbar ist, so dass das Elastomermaterial im montierten Zustand der Steuereinheit eine klebende Verbindung zwischen der jeweiligen Deckplatte 64 bzw. 66 und der entsprechenden Kanalseite 24 bzw. 26 der Gehäuseteile 12 bzw. 14 schafft.

Damit schafft die erfindungsgemäße Zwischenplatte 30 einerseits einen dichten Abschluss mit den jeweiligen Kanalseiten 24 bzw. 26 und andererseits eröffnet die Zwischenplatte 30 die Möglichkeit, das Druckmittel in der Plattenebene PE der Fluidführungsplatte 62 durch den mindestens einen Fluidkanal 72 zu führen und somit die konstruktiven Möglichkeiten im Bereich der Gehäuseteile 12, 14 zu erweitern.

Das Vorsehen eines haftend oder klebend wirkenden Elastomermaterials hat den Vorteil, dass das Elastomermaterial sowohl mit dem das Elastomermaterial tragenden Teil der Zwischenplatte als auch mit dem Teil, an dem das Elastomermaterial anliegt, im montierten Zustand eine feste Verbindung eingeht und somit Relativbewegungen zwischen den Teilen, insbesondere in Richtungen parallel zu einer Erstreckungsebene der Zwischenplatte, nicht zu Reibung des an dem Elastomer anliegenden Teils auf dem Elastomer und somit zu einer Beschädigung der Elastomerschicht im Laufe der Zeit führen, sondern zu weit weniger schädlichen Scherbewegungen in der Elastomerschicht, so dass eine verbesserte Dauerstandfestigkeit der Dichtelemente aus Elastomermaterial erreichbar ist.

Insbesondere ist das Elastomermaterial sowohl für die Dichtungselemente 103 als auch für die Dichtungselemente 133 so ausgebildet, dass es ein teilpolmerisiertes Kautschukmaterial umfasst, wobei das Kautschukmaterial einen Polymerisationsgrad aufweist, der im Bereich zwischen 15% oder mehr und 90 % oder weniger liegt.

Vorzugsweise ist das Elastomermaterial ein Fluorpolymerkautschuk.

Beispielsweise weist das Elastomermaterial eine Klebewirkung auf, die bei Entfernung der Deckplatte 64, 66 von der Fluidführungsplatte 62 zu einer Abzugsspannung von 0,1 kPa oder mehr führt, wobei als relevante Fläche die Gesamtflächenausdehnung angesetzt ist, über die die Deckplatte und die Fluidführungsplatte im Überlappungsbereich erstrecken, das heißt, mit Einbeziehung auch der Flächenausdehnung der Durchbrüche.

Die Dicke der Schicht des Elastomermaterials liegt vorzugsweise im Bereich zwischen 5 µm oder mehr und 100 µm oder weniger.

Das Elastomermaterial kann vollflächig aufgetragen werden, es ist aber auch möglich, Elastomermaterial als partiell lokale Schicht aufzutragen.

Hinsichtlich der Ausbildung der Fluidführungsplatte 62 und der Deckplatten 64, 66 wurden bislang keine näheren Angaben gemacht.

So ist vorzugsweise vorgesehen, dass die Fluidführungsplatte 62 aus Aluminium hergestellt ist.

Ergänzend dazu können auch die Deckplatten 64, 66 aus Aluminium oder Stahl hergestellt sein.

Wesentlich ist es jedoch für eine zuverlässige Abdichtung zwischen den jeweiligen Deckplatten 64 und 66 und den jeweiligen Kanalseiten 24 und 26 der Gehäuseteile 12, 14, dass die Deckplatten eine Steifigkeit aufweisen, deren Durchbiegung über eine Distanz von 10 mm bei einem auf diesen flächenhaft lastenden Fluiddruck von 50 bar 100 µm oder weniger beträgt, vorzugsweise bei diesem Fluiddruck 50 µm oder weniger beträgt, noch besser 30µm oder weniger beträgt und im Optimalfall 20µm oder weniger beträgt, um auch dann, wenn die jeweilige Deckplatte 64, 66 in einem ein Dichtelement 132 tragenden Bereich nicht durch die Fluidführungsplatte 62 unmittelbar abgestützt ist, eine sichere Abdichtung mit der jeweiligen Kanalseite 24, 26 zu erreichen.

Eine derartige Steifigkeit der Deckplatten 64, 66 eröffnet eine ausreichend große Zahl von Freiheitsgraden hinsichtlich der Ausbildung der Fluidführungsplatte 62, insbesondere mit Fluidführungskanälen 72, ohne dass es notwendig ist, die Deckplatten 64, 66 jeweils an den mit Dichtelementen 132 versehenen Stellen unmittelbar durch die Fluidführungsplatte oder in geringem Abstand durch die Fluidführungsplatte 62 abzustützen.

Sind die Deckplatten 64 bzw. 66 beispielsweise aus Stahl ausgebildet, so können die Deckplatten 64, 66 eine Dicke zwischen 0,5 mm oder mehr und 0,8 mm oder weniger aufweisen.

Es besteht aber auch die Möglichkeit, die Deckplatten 64, 66 aus Aluminium herzustellen.

In diesem Fall haben die Deckplatten 64, 66 eine Dicke im Bereich zwischen 1 mm oder mehr und 2 mm oder weniger.

Vorzugsweise weisen die Deckplatten 64, 66 ein Elastizitätsmodul auf, der im Bereich zwischen 70 GPa und 210 GPa liegt.

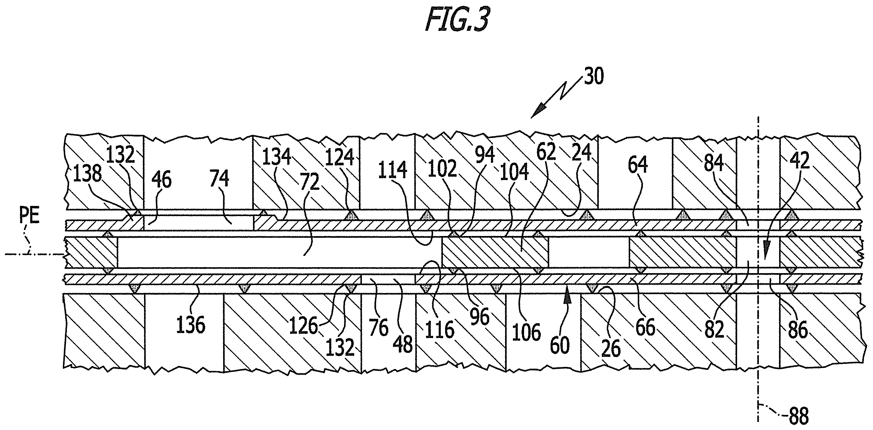

Bei einem zweiten Ausführungsbeispiel, dargestellt in Fig. 3, sind diejenigen Elemente, die mit denen des ersten Ausführungsbeispiels identisch sind, mit denselben Bezugszeichen versehen, so dass hinsichtlich der Beschreibung derselben vollinhaltlich auf die Ausführungen zum ersten Ausführungsbeispiel Bezug genommen werden kann.

Im Gegensatz zum ersten Ausführungsbeispiel weisen die Deckplatten 64 und 66 beispielsweise im Bereich um den Durchbruch 74 herum Materialanhäufungen 138 auf, die über die Oberflächen 134 und 136 der Deckplatten 64, 66 überstehen, um in diesen Bereichen eine höhere Kompression für die Dichtelemente 132 aus Elastomermaterial zu erreichen oder Durchbiegungen der Deckplatten 64, 66 in Richtung von den Kanalseiten 24 bzw. 26 weg zu kompensieren.

Derartige Materialanhäufungen 138 sind vorzugsweise rückseitenneutral in die Deckplatten 64, 66 eingeformt, das heißt, dass diese sich nicht auf die Ausbildung der der Fluidführungsplatte 62 zugewandten Seiten der Deckplatten 64, 66 auswirken.

Vorzugsweise sind diese Materialanhäufungen 138 durch Umformung der jeweiligen Deckplatten 64, 66, beispielsweise jeweils um den einen Durchbruch herum, aufgrund eines Materialflusses, beispielsweise durch Stauchen oder Prägen erzeugbar.

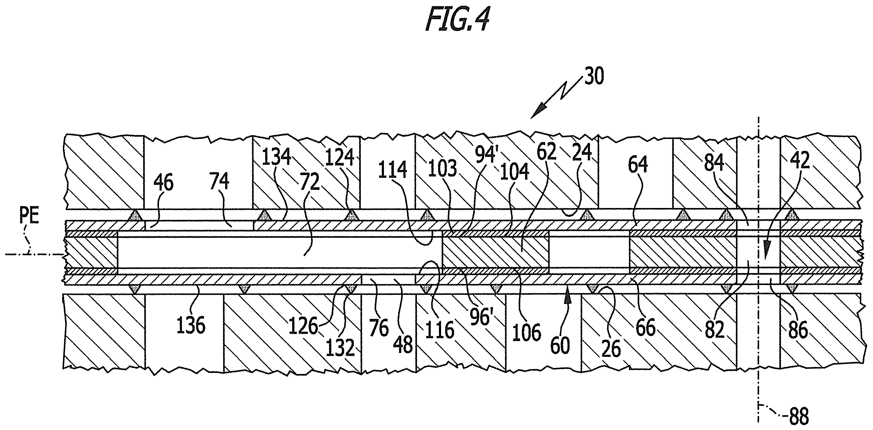

Bei einem dritten Ausführungsbeispiel, dargestellt in Fig. 4, sind diejenigen Elemente, die mit denen des ersten Ausführungsbeispiels identisch sind, mit denselben Bezugszeichen versehen, so dass hinsichtlich der Beschreibung derselben vollinhaltlich auf die Ausführungen zum ersten Ausführungsbeispiel oder zum zweiten Ausführungsbeispiel Bezug genommen werden kann.

Im Gegensatz zum ersten und zweiten Ausführungsbeispiel sind bei dem dritten Ausführungsbeispiel die Zwischendichtungssysteme 94' und 96' so ausgebildet, dass sie vollflächig auf die Fluidführungsplatte 62 aufgetragene Dichtelemente 103 umfassen, die eine Abdichtung und eine klebende Verbindung zwischen der Fluidführungsplatte 62 sowie den Deckplatten 64 und 66 herstellen.

Dabei verlaufen die Dichtelemente 103 jeweils ebenfalls um den Fluidkanal 72 sowie auch um die jeweiligen Durchbrüche 82 bzw. 84 und 86 herum und bilden einen fluiddichten Abschluss.

Der Vorteil der flächigen Dichtelemente 103 ist dabei darin zu sehen, dass mit diesen einerseits eine stabilere Verbindung zwischen der Fluidführungsplatte 62 und die Deckplatten 64 und 66 herstellbar ist und dass andererseits ebenfalls aufgrund der großflächigen Ausführung eine zuverlässige Abdichtung erreichbar ist.

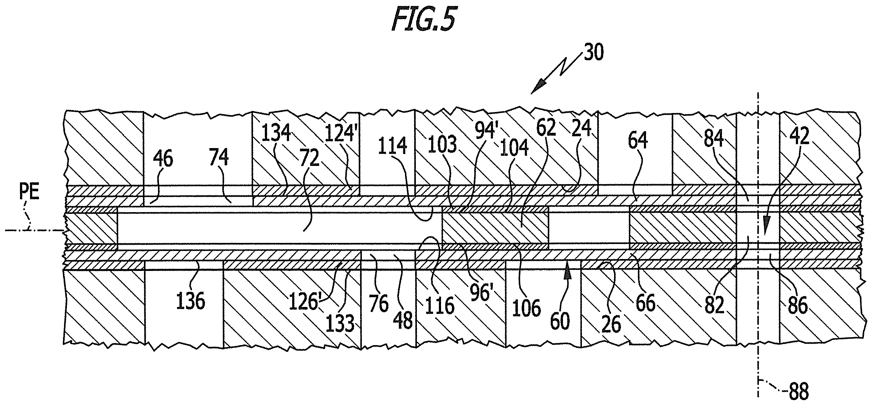

Bei einem vierten Ausführungsbeispiel, dargestellt in Fig. 5, sind ebenfalls diejenigen Elemente, die mit denen der voranstehenden Ausführungsbeispiele identisch sind, mit denselben Bezugszeichen versehen, so dass hinsichtlich der Beschreibung derselben vollinhaltlich auf die Ausführungen zu den voranstehenden Ausführungsbeispielen Bezug genommen werden kann.

Ergänzend zu der Ausbildung der Zwischendichtungssysteme 94' und 96' als flächenhafte Dichtelemente 103, wie im Zusammenhang mit dem dritten Ausführungsbeispiel beschrieben, ist bei dem vierten Ausführungsbeispiel gemäß Fig. 5 noch vorgesehen, dass die Dichtungssysteme 124' und 126' ebenfalls keine linienförmigen Dichtelemente 132 aufweisen sondern ebenfalls flächenhafte Dichtelemente 133, die beispielsweise so angeordnet sind, dass sie im Bereich eines Überlapps zwischen den Deckplatten 64 und 66 und den Kanalseiten 24 und 26 der Gehäuseteile auf die Deckplatten 64 und 64 aufgetragen sind und somit bei der Montage der Gehäuseteile 12, 14 in eine haftende oder klebende Verbindung mit den Kanalseiten 24, 26 bringbar sind, so dass dadurch eine dauerhafte Verbindung zwischen den Kanalseiten 24 und 26 sowie den Dichtelementen 133 erreichbar ist.

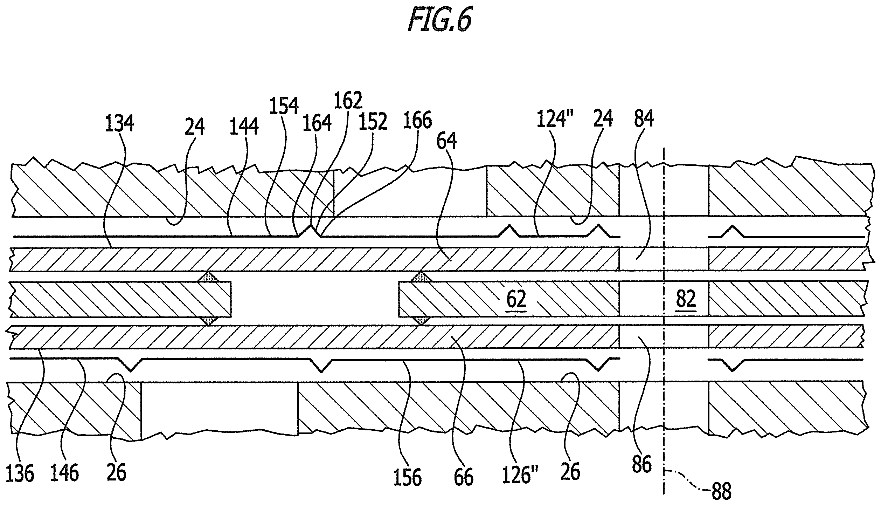

Bei einem fünften Ausführungsbeispiel, dargestellt in Fig. 6, sind diejenigen Elemente, die mit denen der voranstehenden Ausführungsbeispiele identisch sind, mit denselben Bezugszeichen versehen, so dass hinsichtlich der Beschreibung derselben vollinhaltlich auf die Ausführungen zu den voranstehenden Ausführungsbeispielen Bezug genommen werden kann.

Im Gegensatz zu diesen Ausführungsbeispielen sind die Dichtungssysteme 124" und 126" nicht aus den Dichtelementen 132 aus Elastomermaterial gebildet, sondern die Dichtungssysteme 124" und 126" werden gebildet durch Funktionslagen 144 und 146, die an den abzudichtenden Stellen Dichtsicken 152 aufweisen, die in Dichtlagen 154, 156 eingeformt sind, wobei die Dichtlagen 154 und 156 beispielsweise aus dünnem Federstahlblech hergestellt sind.

Vorzugsweise sind dabei die Dichtsicken 152 in die Dichtlagen 154, 156 derart eingeformt, dass diese über die Dichtlagen 154 bzw. 156 in Richtung der Kanalseiten 24 bzw. 26 überstehen und somit mit einem Sickenkamm 162 an den Kanalseiten 24 bzw. 26 der Gehäuseteile 12 bzw. 14 anlegbar sind, während die Sicken 152 mit ihren Sickenfüßen 164, 166 jeweils auf den Oberflächen 134 bzw. 136 der Deckplatten 64 bzw. 66 anliegen.

Im Übrigen sind all diejenigen Teile, die mit denen der voranstehenden Ausführungsbeispiele identisch sind, mit denselben Bezugszeichen versehen, so dass vollinhaltlich auf die Ausführungen zu diesen Ausführungsbeispielen, insbesondere im Zusammenhang mit Fig. 2, Bezug genommen werden kann.

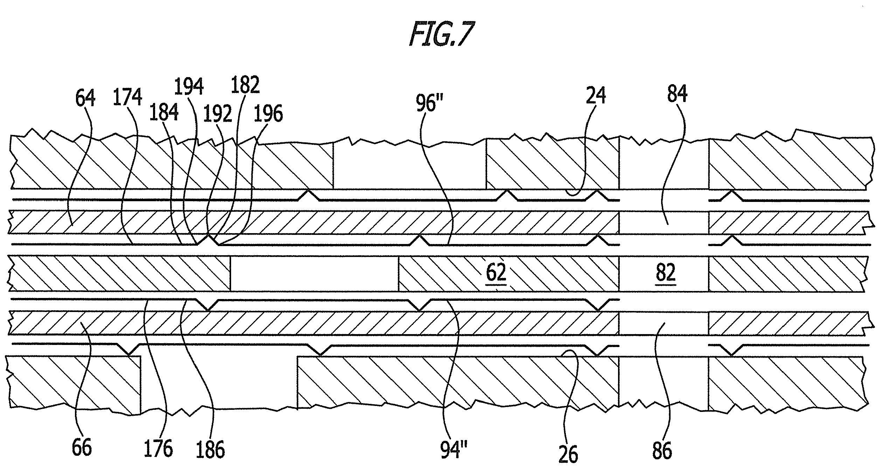

Bei einem sechsten Ausführungsbeispiel einer erfindungsgemäßen Zwischenplatte, dargestellt in Fig. 7, sind diejenigen Teile, die mit den voranstehenden Ausführungsbeispielen identisch sind, mit denselben Bezugszeichen versehen, so dass hinsichtlich der Beschreibung vollinhaltlich auf die Ausführungen hierzu verwiesen werden kann.

Im Gegensatz zu den voranstehenden Ausführungsbeispielen sind bei dem sechsten Ausführungsbeispiel auch die Zwischendichtungssysteme 94" und 96" durch Funktionslagen 174 und 176 gebildet, welche Sicken 182 aufweisen, die in Dichtlagen 184 bzw. 186 eingeformt sind, wobei die Sicken 182 vorzugsweise so ausgebildet sind, dass ein Sickenkamm 192 den jeweiligen Deckplatten 64 bzw. 66 zugewandt ist und an diesen anliegt, während die Sicken 182 mit Sickenfüßen 194 bzw. 196 an der Fluidführungsplatte 62 anliegen.

Somit sind bei dem sechsten Ausführungsbeispiel sowohl die Zwischendichtungssysteme 94" und 96" als auch die Dichtungssysteme 124" bzw. 126" durch metallische Funktionslagen 144 bzw. 146 und 174 bzw. 176 gebildet.

## Patentansprüche

1. Zwischenplatte (30) zur Montage zwischen Gehäuseteilen (12, 14) einer fluidbetriebenen Steuereinheit (10), insbesondere einer Getriebeeinheit, umfassend eine plattenförmig ausgebildete Zentraleinheit (60) und beiderseits der Zentraleinheit (60) jeweils ein Dichtungssystem (124, 126) zur Abdichtung zwischen der Zentraleinheit (60) und dem dieser gegenüberliegenden Gehäuseteil (12, 14), welches auf der jeweiligen Seite (32, 34) der Zentraleinheit (60) angeordnete um Durchbrüche (42, 44, 46, 74, 76) herum verlaufende Dichtelemente (132, 133) umfasst,
**dadurch gekennzeichnet, dass** die Zentraleinheit (60) eine sich in einer Plattenebene (PE) erstreckende und mindestens einen in der Plattenebene (PE) verlaufenden Fluidführungskanal (72) aufweisende Fluidführungsplatte (62) sowie beiderseits der Fluidführungsplatte (62) angeordnete und Durchbrüche (74, 76) als Zugänge zu dem mindestens einen Fluidführungskanal (72) aufweisende Deckplatten (64, 66) umfasst, dass zwischen der jeweiligen Deckplatte (64, 66) und der Fluidführungsplatte (62) ein den mindestens einen Fluidführungskanal (72) abdichtendes Zwischendichtungssystem (94, 96) vorgesehen ist und dass die jeweilige Deckplatte (64, 66) das jeweilige Dichtungssystem (124, 126) zur Abdichtung zwischen der Zentraleinheit (60) und dem jeweiligen Gehäuseteil (12, 14) trägt.

2. Zwischenplatte nach Anspruch 1, **dadurch gekennzeichnet, dass** das Zwischendichtungselement (30) zusätzlich zur Abdichtungswirkung die Fluidführungsplatte (62) mit der jeweiligen Deckplatte (64, 66) durch eine Klebewirkung verbindet.

3. Zwischenplatte nach einem der voranstehenden Ansprüche, **dadurch gekennzeichnet, dass** Dichtelemente (102, 103) des Zwischendichtungssystems (94, 96) sowohl mit der Fluidführungsplatte (62) als auch mit der jeweiligen Deckplatte (64, 66) klebend zusammenwirken.

4. Zwischenplatte nach einem der voranstehenden Ansprüche, **dadurch gekennzeichnet, dass** Dichtelemente (102, 103) des Zwischendichtungssystems (94, 96) in einem Abstand von 2 mm oder weniger von Rändern des mindestens einen Fluidführungskanals (72) verlaufen.

5. Zwischenplatte nach einem der voranstehenden Ansprüche, **dadurch gekennzeichnet, dass** das Zwischendichtungssystem (94, 96) um den mindestens einen Fluidführungskanal (72) in der Fluidführungsplatte (62) herum verlaufende Dichtelemente (102, 103) umfasst, dass insbesondere die Dichtelemente (102, 103) um den mindestens einen Fluidführungskanal (72) in der Fluidführungsplatte (62) und um die Durchbrüche (84,86) in den Deckplatten (64,66) und/oder der Fluidführungsplatte (62) herum verlaufen.

6. Zwischenplatte nach einem der voranstehenden Ansprüche, **dadurch gekennzeichnet, dass** das Zwischendichtungssystem (94, 96) zwischen der Fluidführungsplatte (62) und der jeweiligen Deckplatte (64, 66) angeordnete Dichtelemente (102, 103) aus Elastomermaterial umfasst, dass insbesondere das Elastomermaterial auf die jeweilige Platte (62, 64, 66) durch Walzen oder durch Siebdruck aufgetragen ist, dass insbesondere das Zwischendichtungssystem (94, 96) als Dichtelement auf der jeweiligen Platte (62, 64, 66) angeordnete linienförmige Elastomerstreifen umfasst.

7. Zwischenplatte nach einem der voranstehenden Ansprüche, **dadurch gekennzeichnet, dass** zwischen den Deckplatten (64, 66) und der Fluidführungsplatte (62) die Zwischendichtungssysteme (94, 96) bildende Dichtlagen (184, 186) mit eingeformten Dichtsicken (182) als Dichtelemente (132) angeordnet sind.

8. Zwischenplatte nach einem der voranstehenden Ansprüche, **dadurch gekennzeichnet, dass** die Deckplatten (64, 66) eine Steifigkeit aufweisen, deren Durchbiegung über eine freie Distanz von 10 mm bei einem auf diese flächenhaft lastenden Fluiddruck von 50 bar 100 µm oder weniger beträgt.

9. Zwischenplatte nach einem der voranstehenden Ansprüche, **dadurch gekennzeichnet, dass** die Deckplatten (64, 66) aus Stahl hergestellt sind, dass insbesondere die Deckplatten (64, 66) eine Dicke im Bereich zwischen 0,5 mm oder mehr und 2 mm oder weniger aufweisen.

10. Zwischenplatte nach einem der Ansprüche 1 bis 8, **dadurch gekennzeichnet, dass** die Deckplatten (64, 66) aus Aluminium oder Aluminiumlegierungen hergestellt sind, dass insbesondere die Deckplatten (64, 66) eine Dicke im Bereich zwischen 1 mm oder mehr und 2 mm oder weniger aufweisen.

11. Zwischenplatte nach einem der voranstehenden Ansprüche, **dadurch gekennzeichnet, dass** die Deckplatten (64, 66) einen Elastizitätsmodul aufweisen, der im Bereich von 70GPa oder mehr bis 210 GPa oder weniger liegt.

12. Zwischenplatte nach einem der voranstehenden Ansprüche, **dadurch gekennzeichnet, dass** die Deckplatten (64, 66) zur Ausbildung des Dichtungssystems (124, 126) auf ihrer dem jeweiligen Gehäuseteil (12, 14) zugewandten Seite (32, 34) Materialanhäufungen (138) aufweisen, dass insbesondere die Materialanhäufungen (138) rückseitenneutral ausgebildet sind, dass insbesondere die Materialanhäufungen (138) durch Umformung entstanden sind.

13. Zwischenplatte nach einem der voranstehenden Ansprüche, **dadurch gekennzeichnet, dass** das Dichtungssystem (124, 126) als Dichtelement (132) auf der jeweiligen Deckplatte (64, 66) angeordnetes Elastomermaterial umfasst, dass insbesondere das Elastomermaterial auf die jeweilige Deckplatte (64, 66) durch Siebdruck aufgetragen ist, dass insbesondere das Dichtungssystem (124, 126) als Dichtelement auf der Deckplatte (64, 66) angeordnete Flächen (133) und/oder linienförmige Streifen (132) aus Elastomermaterial umfasst.

14. Zwischenplatte nach einem der voranstehenden Ansprüche, **dadurch gekennzeichnet, dass** auf den Deckplatten (64, 66) das Dichtungssystem (124, 126) bildende Dichtlagen (154, 156) mit eingeformten Dichtsicken (152) als Dichtelemente angeordnet sind.

15. Zwischenplatte nach einem der voranstehenden Ansprüche, **dadurch gekennzeichnet, dass** die Deckplatten (64, 66) und die Fluidführungsplatte (62) jeweils aus Materialien hergestellt sind, deren Wärmeausdehnungskoeffizienten sich um maximal 20%, noch besser um maximal 10%, unterscheiden.

16. Zwischenplatte nach einem der voranstehenden Ansprüche, **dadurch gekennzeichnet, dass** die Deckplatten (64, 66) und die Fluidführungsplatte (62) aus identischen Materialien hergestellt sind, dass insbesondere die Deckplatten (64, 66) und die Fluidführungsplatte (62) aus Aluminium hergestellt sind.

17. Fluidbetriebene Steuereinheit (10) umfassend zwei Gehäuseteile (12, 14) und einer zwischen den Gehäuseteilen (12, 14) angeordnete Zwischenplatte (30), **dadurch gekennzeichnet, dass** die Zwischenplatte (30) gemäß einem oder mehreren der voranstehenden Ansprüche ausgebildet ist.

## Claims

1. Intermediate plate (30) for mounting between housing parts (12, 14) of a fluid-operated control unit (10), in particular a transmission unit, comprising a central unit (60) of plate-shaped configuration and, on both sides of the central unit (60), a sealing system (124, 126) for sealing between the central unit (60) and the housing part (12, 14) opposite thereto in each case, said sealing system (124, 126) comprising sealing elements (132, 133) arranged on the respective side (32, 34) of the central unit (60) and extending around cutouts (42, 44, 46, 74, 76),
**characterized in that** the central unit (60) comprises a fluid routing plate (62) extending in a plate plane (PE) and having at least one fluid routing channel (72) extending in the plate plane (PE) and comprises cover plates (64, 66) arranged on both sides of the fluid routing plate (62) and having cutouts (74, 76) as accesses to the at least one fluid routing channel (72), **in that** an intermediate sealing system (94, 96) sealing the at least one fluid routing channel (72) is provided between the respective cover plate (64, 66) and the fluid routing plate (62) and **in that** the respective cover plate (64, 66) carries the respective sealing system (124, 126) for sealing between the central unit (60) and the respective housing part (12, 14).

2. Intermediate plate in accordance with claim 1, **characterized in that** the intermediate sealing element (30), in addition to the sealing effect thereof, connects the fluid routing plate (62) to the respective cover plate (64, 66) through an adhesive effect thereof.

3. Intermediate plate in accordance with any one of the preceding claims, **characterized in that** sealing elements (102, 103) of the intermediate sealing system (94, 96) cooperate adhesively both with the fluid routing plate (62) and the respective cover plate (64, 66).

4. Intermediate plate in accordance with any one of the preceding claims, **characterized in that** sealing elements (102, 103) of the intermediate sealing system (94, 96) extend at a distance of 2 mm or less from the edges of the at least one fluid routing channel (72).

5. Intermediate plate in accordance with any one of the preceding claims, **characterized in that** the intermediate sealing system (94, 96) comprises sealing elements (102, 103) extending around the at least one fluid routing channel (72) in the fluid routing plate (62), in particular **in that** the sealing elements (102, 103) extend around the at least one fluid routing channel (72) in the fluid routing plate (62) and around the cutouts (84, 86) in the cover plates (64, 66) and/or the fluid routing plate (62).

6. Intermediate plate in accordance with any one of the preceding claims, **characterized in that** the intermediate sealing system (94, 96) comprises sealing elements (102, 103) of elastomeric material arranged between the fluid routing plate (62) and the respective cover plate (64, 66), in particular **in that** the elastomeric material is applied to the respective plate (62, 64, 66) by rolling or by screen printing, in particular **in that** intermediate sealing system (94, 96) comprises, as the sealing element, linear elastomer strips arranged on the respective plate (62, 64, 66).

7. Intermediate plate in accordance with any one of the preceding claims, **characterized in that** the cover plates (64, 66) and the fluid routing plate (62) have arranged therebetween sealing layers (184, 186) having sealing beads (182) integrally formed therein as the sealing elements (132) and forming the intermediate sealing systems (94, 96).

8. Intermediate plate in accordance with any one of the preceding claims, **characterized in that** the cover plates (64, 66) exhibit a stiffness such that their deflection over a free distance of 10 mm when subjected to a surface load from a fluid pressure of 50 bar is 100 µm or less.

9. Intermediate plate in accordance with any one of the preceding claims, **characterized in that** the cover plates (64, 66) are made of steel, in particular **in that** the cover plates (64, 66) have a thickness in the range between 0.5 mm or more and 2 mm or less.

10. Intermediate plate in accordance with any one of claims 1 to 8, **characterized in that** the cover plates (64, 66) are made of aluminium or aluminium alloys, in particular **in that** the cover plates (64, 66) have a thickness in the range between 1 mm or more and 2 mm or less.

11. Intermediate plate in accordance with any one of the preceding claims, **characterized in that** the cover plates (64, 66) have a modulus of elasticity in the range of 70 GPa or more to 210 GPa or less.

12. Intermediate plate in accordance with any one of the preceding claims, **characterized in that** the cover plates (64, 66) comprise on the side (32, 34) thereof facing towards the respective housing part (12, 14) material accumulations (138) for forming the sealing system (124, 126), in particular **in that** the material accumulations (138) are configured in a rear side neutral manner, in particular **in that** the material accumulations (138) have resulted from reshaping.

13. Intermediate plate in accordance with any one of the preceding claims, **characterized in that** the sealing system (124, 126) comprises, as the sealing element (132), an elastomeric material arranged on the respective cover plate (64, 66), in particular **in that** the elastomeric material is applied to the respective cover plate (64, 66) by screen printing, in particular **in that** that the sealing system (124, 126) comprises, as the sealing element, areas (133) and/or linear strips (132) of elastomeric material arranged on the cover plate (64, 66).

14. Intermediate plate in accordance with any one of the preceding claims, **characterized in that** the cover plates (64, 66) have arranged thereon sealing layers (154, 156) having sealing beads (152) integrally formed therein as the sealing elements and forming the sealing system (124, 126).

15. Intermediate plate in accordance with any one of the preceding claims, **characterized in that** the cover plates (64, 66) and the fluid routing plate (62) are each made of materials having coefficients of thermal expansion differing at most by 20 %, more preferably at most by 10 %.

16. Intermediate plate in accordance with any one of the preceding claims, **characterized in that** the cover plates (64, 66) and the fluid routing plate (62) are made of identical materials, in particular **in that** the cover plates (64, 66) and the fluid routing plate (62) are made of aluminium.

17. Fluid-operated transmission unit (10), comprising two housing parts (12, 14) and an intermediate plate (30) arranged between the housing parts (12, 14), **characterized in that** the intermediate plate (30) is configured in accordance with any one or more of the preceding claims.

## Revendications

1. Plaque intercalaire (30) destinée au montage entre des parties de boîtier (12, 14) d'une unité de commande (10) actionnée par fluide, en particulier d'une unité de transmission, comprenant une unité centrale (60) réalisée de manière à présenter une forme de plaque et, de part et d'autre de l'unité centrale (60), respectivement un système d'étanchéité (124, 126) servant à l'étanchéification entre l'unité centrale (60) et la partie de boîtier (12, 14) faisant face à cette dernière, lequel système d'étanchéité comprend des éléments étanches (132, 133) disposés sur le côté (32, 34) respectif de l'unité centrale (60), s'étendant tout autour d'ajours (42, 44, 46, 74, 76),
**caractérisée en ce que** l'unité centrale (60) comprend une plaque de guidage de fluide (62) s'étendant dans un plan de plaque (PE) et présentant au moins un canal de guidage de fluide (72) s'étendant dans le plan de plaque (PE), ainsi que des plaques de recouvrement (64, 66) disposées de part et d'autre de la plaque de guidage de fluide (62) et présentant des ajours (74, 76) faisant office d'accès à l'au moins un canal de guidage de fluide (72), qu'un système d'étanchéité intercalaire (94, 96) étanchéifiant au moins un canal de guidage de fluide (72) est prévu entre la plaque de recouvrement (64, 66) respective et la plaque de guidage de fluide (62), et que la plaque de recouvrement (64, 66) respective supporte le système d'étanchéité (124, 126) respectif servant à l'étanchéification entre l'unité centrale (60) et la partie de boîtier (12, 14) respective.

2. Plaque intercalaire selon la revendication 1, **caractérisée en ce que** l'élément d'étanchéité intercalaire (30) relie, en supplément aux fins de l'action d'étanchéification, la plaque de guidage de fluide (62) à la plaque de recouvrement (64, 66) respective par une action de collage.

3. Plaque intercalaire selon l'une quelconque des revendications précédentes, **caractérisée en ce que** des éléments étanches (102, 103) du système d'étanchéité intercalaire (94, 96) coopèrent par collage à la fois avec la plaque de guidage de fluide (62) et la plaque de recouvrement (64, 66) respective.

4. Plaque intercalaire selon l'une quelconque des revendications précédentes, **caractérisée en ce que** des éléments étanches (102, 103) du système d'étanchéité intercalaire (94, 96) s'étendent à une distance de 2 mm ou moins des bords de l'au moins un canal de guidage de fluide (72).

5. Plaque intercalaire selon l'une quelconque des revendications précédentes, **caractérisée en ce que** le système d'étanchéité intercalaire (94, 96) comprend des éléments étanches (102, 103) s'étendant tout autour de l'au moins un canal de guidage de fluide (72) dans la plaque de guidage de fluide (62), qu'en particulier les éléments étanches (102, 103) s'étendent tout autour de l'au moins un canal de guidage de fluide (72) dans la plaque de guidage de fluide (62) et tout autour des ajours (84, 86) dans les plaques de recouvrement (64, 66) et/ou de la plaque de guidage de fluide (62).

6. Plaque intercalaire selon l'une quelconque des revendications précédentes, **caractérisée en ce que** le système d'étanchéité intercalaire (94, 96) comprend des éléments étanches (102, 103) disposés entre la plaque de guidage de fluide (62) et la plaque de recouvrement (64, 66) respective, composés d'un matériau élastomère, qu'en particulier le matériau élastomère est appliqué sur la plaque (62, 64, 66) respective par laminage ou par sérigraphie, qu'en particulier le système d'étanchéité intercalaire (94, 96) comprend en tant qu'élément étanche des bandes d'élastomère de forme linéaire disposées sur la plaque (62, 64, 66) respective.

7. Plaque intercalaire selon l'une quelconque des revendications précédentes, **caractérisée en ce que** des couches étanches (184, 186) formant les systèmes d'étanchéité intercalaire (94, 96), avec des moulures étanches (182) moulées sont disposées en tant qu'éléments étanches (132) entre les plaques de recouvrement (64, 66) et la plaque de guidage de fluide (62).

8. Plaque intercalaire selon l'une quelconque des revendications précédentes, **caractérisée en ce que** les plaques de recouvrement (64, 66) présentent une rigidité, dont la flexion présente une valeur de 100 µm ou moins sur une distance libre de 10 mm à une pression de fluide exerçant une contrainte à plat sur cette dernière de 50 bar.

9. Plaque intercalaire selon l'une quelconque des revendications précédentes, **caractérisée en ce que** les plaques de recouvrement (64, 66) sont fabriquées à partir d'acier, qu'en particulier les plaques de recouvrement (64, 66) présentent une épaisseur située dans la plage comprise entre 0,5 mm ou plus et 2 mm ou moins.

10. Plaque intercalaire selon l'une quelconque des revendications 1 à 8, **caractérisée en ce que** les plaques de recouvrement (64, 66) sont fabriquées à partir d'aluminium ou d'alliages d'aluminium, qu'en particulier les plaques de recouvrement (64, 66) présentent une épaisseur située dans la plaque comprise entre 1 mm ou plus et 2 mm ou moins.

11. Plaque intercalaire selon l'une quelconque des revendications précédentes, **caractérisée en ce que** les plaques de recouvrement (64, 66) présentent un module d'élasticité, qui se situe dans la plage allant de 70 GPa ou plus jusqu'à 210 GPa ou moins.

12. Plaque intercalaire selon l'une quelconque des revendications précédentes, **caractérisée en ce que** les plaques de recouvrement (64, 66) présentent, aux fins de la réalisation du système d'étanchéité (124, 126), sur leur côté (32, 34) tourné vers la partie de boîtier (12, 14) respective, des accumulations de matériau (138), qu'en particulier les accumulations de matériau (138) sont réalisées de manière neutre côté arrière, qu'en particulier les accumulations de matériau (138) sont apparues par transformation.

13. Plaque intercalaire selon l'une quelconque des revendications précédentes, **caractérisée en ce que** le système d'étanchéité (124, 126) comprend en tant qu'élément étanche (132) un matériau élastomère disposé sur la plaque de recouvrement (64, 66) respective, qu'en particulier le matériau élastomère est appliqué sur la plaque de recouvrement (64, 66) respective par sérigraphie, qu'en particulier le système d'étanchéité (124, 126) comprend en tant qu'élément étanche des faces (133) et/ou des bandes (132) de forme linéaire, disposées sur la plaque de recouvrement (64, 66), composées de matériau élastomère.

14. Plaque intercalaire selon l'une quelconque des revendications précédentes, **caractérisée en ce que** des couches étanches (154, 156) formant le système d'étanchéité (124, 126), avec des moulures étanches (152) moulées sont disposées en tant qu'éléments d'étanchéité sur les plaques de recouvrement (64, 66).

15. Plaque intercalaire selon l'une quelconque des revendications précédentes, **caractérisée en ce que** les plaques de recouvrement (64, 66) et la plaque de guidage de fluide (62) sont fabriquées respectivement à partir de matériaux, dont les coefficients de dilatation thermique se distinguent au maximum de 20 %, mieux encore au maximum de 10 %.

16. Plaque intercalaire selon l'une quelconque des revendications précédentes, **caractérisée en ce que** les plaques de recouvrement (64, 66) et la plaque de guidage de fluide (62) sont fabriquées à partir de matériaux identiques, qu'en particulier les plaques de recouvrement (64, 66) et la plaque de guidage de fluide (62) sont fabriquées à partir d'aluminium.

17. Unité de commande (10) actionnée par fluide comprenant deux parties de boîtier (12, 14) et une plaque intercalaire (30) disposée entre les parties de boîtier (12, 14), **caractérisée en ce que** la plaque intercalaire (30) est réalisée selon l'une quelconque ou plusieurs des revendications précédentes.
